# EUROPÄISCHE PATENTSCHRIFT

(11) **EP 1 290 419 B1**
(45) Veröffentlichungstag und Bekanntmachung des Hinweises auf die Patenterteilung: **04.02.2004**
(21) Anmeldenummer: 01949263.6
(22) Anmeldetag: 13.06.2001
(51) Int. Cl.: G01M 3/38

(54) **VERFAHREN ZUR BERÜHRUNGSLOSEN SONDIERUNG VON LECKAGEN, VORZUGSWEISE AN WASSER- UND ABWASSERLEITUNGEN**
METHOD FOR NON-CONTACT SOUNDING OF LEAKAGES, PARTICULARLY ON WATER AND SEWAGE PIPES
PROCEDE DE SONDAGE SANS CONTACT DE FUITE, DE PREFERENCE AU NIVEAU DE CONDUITES D'EAU ET D'EAUX USEES

(30) Priorität: 14.06.2000 DE 10029243
(43) Veröffentlichungstag der Anmeldung: 12.03.2003
(73) Patentinhaber: Hallesche Wasser und Abwasser GmbH, 06108 Halle (DE)
(72) Erfinder: WEBER, Andre, 06128 Halle (DE); GWIZDEK, Bernd, 06128 Halle (DE); FROHBERG, Falk, 06124 Halle (DE); ROHBECK, Ulf, 12683 Berlin (DE); KRICKAU, Hans-Jörg, 12683 Berlin (DE)
(74) Vertreter: Voigt, Wolf-Rüdiger
(86) Internationale Anmeldenummer: PCT/DE2001/002225
(87) Internationale Veröffentlichungsnummer: WO 2001/096818

(56) Entgegenhaltungen:
- EP-A- 0 989 353
- WO-A-97/20167
- US-A- 5 045 937

## Beschreibung

Die Erfindung betrifft ein berührungsloses Sondierungsverfahren zum Feststellen und Auffinden von Leckagen an erdverlegten Produktleitungen, d. h. vorzugsweise an Wasser- und Abwasserleitungen. Das Sondierungsverfahren erfolgt unter Einsatz fluggestützter Sensortechnik.

Die Tatsache, daß die Rohstoffressourcen auf der Erde nicht unerschöpflich sind, zwingt zum sorgsamen und sparsamen Umgang mit lebensnotwendigen Rohstoffen. Unter diesen Gesichtspunkt kommt der Verringerung der Verluste von Trinkwasser, welches ein lebensnotwendiges Lebensmittel ist, eine große Bedeutung zu.
Im Bereich der Trinkwasserversorgung treten derzeit große Verluste von wertvollem Wasser beim Transport aus den Fassungsgebieten bzw. Wassergewinnungsanlagen wie Talsperren, Auffangbecken und Wasserwerken, bis zum Verbraucher auf.
In den Ländern Westeuropas, die BRD eingeschlossen, betragen die Wasserverluste ca. 10 bis 30%.

Diverse Einflußfaktoren sind für diesen Zustand verantwortlich. Mit konventionellen Methoden lassen sich überwiegend nur augenscheinliche und akut auftretende Fehlerquellen beheben. Schadstellen an überwiegend unterirdisch verlaufenden Wasserleitungen lassen sich nur schwer und zumeist nach Sichtbarwerden der Ereignisse an der Erdoberfläche feststellen. Bis zu dem Zeitpunkt des Erkennens gehen große Wassermengen verloren und neben den notwendigen Rohrreparaturen erfordert dies oft die Behebung aufwendiger Folgeschäden.

Defekte Wassertransportsysteme verursachen durch den vielfachen Ausfall nicht nur erhebliche Versorgungsengpässe sondern auch Sekundärfolgen wie zum Beispiel Qualitäts- und Verkehrsbeeinflussungen. Bisher zur Ortung von Wasseraustritten aus Rohrleitungen genutzte terrestrische Methoden wie z.B. Schallpegelmessungen mit dem Bodenmikrofon, dem Korrelator und oder Nachtmindest- bzw- Nullverbrauchsmessungen erfassen nicht vollständig die auftretenden Schadensfälle, so daß in Zukunft von dieser Seite auch keine durchgreifenden Lösungen zur Minimierung der Wasserverluste zu erwarten sind.

Das Gros der überwiegend unterirdischen Ver- und Entsorgungsanlagen entzieht sich der Inspektionen durch seine nicht "durchschaubare Lage" ,- ausgenommen oberirdisch sichtbare Anlagenteile. Eine großflächige Begutachtung zur Schadensvorbeugung ist daher bei konventionellen Methoden nur mit großem personellen Aufwand möglich.

Es soll nunmehr auf einige Veröffentlichungen eingegangen werden, die bezogen auf die noch darzulegende Erfindung den Stand der Technik charakterisieren.

Gemäß JP09247847 wird eine temperaturabhängige Aufzeichnungsvorrichtung zum Festhalten anormaler Temperaturzustände vorgeschlagen. Das Gerät bedient sich einer Infrarotkamera zur Ermittlung von Grenzwerten, die durch eine Überwachungseinheit darstellbar ist. Entsprechend eines vorgegebenen Netzwerkes wird ein Gebiet abschnittsweise abgetastet. Innerhalb eines Entscheidungsbereiches werden Abweichungen bestimmt und statistischen Erfahrungswerten gegenübergestellt. Zuverlässige Temperaturmonitore überwachen wechselnde Temperaturänderungen.

Eine fluggestützte Untersuchung von Rohrleitungssystemen, die Heißmedien führen, bietet man in FR2724726 an, wobei ein mit großer Reichweite versehenes infrarotes Temperaturmeßgerät in Kombination mit einem Farbmonitor und auswertungsseitig mit einem Rechner gekoppelt ist. Die Leckage heißer Medien können durch einen patroulierenden Hubschrauber geortet werden.

In GB2275773 wird ein Verfahren vorgestellt, daß unter Einsatz von Wärmebildern, besonders für die Überwachung von Rohrleitungen eingesetzt wird. Es werden Wärmebildkameras verbunden mit einem Computer zur passiven Fehleranalyse genutzt, wobei 3-dimensionale Darstellungen der inneren Struktur der zu untersuchenden Objekte möglich sind. Die Zuordnung der Anomalien erfolgt hier über den Abgleich an einer Farbskala. Die Thermalbilder werden passiv gespeichert, ohne das die Objekte aus der Nähe beobachtet werden müssen.

WO9720167 beschreibt ein Verfahren zur Detektion und Identifikation eines bestimmten Gases charakteristisch für Leckagen an Gas- oder ölführenden Rohrleitungen. Eine Infrarotmessstrecke befindet sich auf der Unterseite eines Flugzeuges und detektiert kontinuierlich die Anwesenheit des Gases entlang einer vorbestimmten Trasse. Die geographische Position des Flugzeugs wird zusammen mit den gemessenen Daten abgespeichert.

Die in US4963742 beschriebene Lösung behandelt eine Rohrleitungsleckermittelung mit Hilfe eines multispektralen Beobachtungssystems, daß Videoaufnahmen eines Gebietes im Vergleich mit bekannten Daten untersucht und die Ursachen für Anomalien herausfindet, die ohne Erklärung nicht nachprüfbar sind.
Das System beinhaltet eine infrarotscannende Einrichtung und Videokameras, die zur Luftaufklärung genutzt werden, zum Sammeln von Informationen, wobei diese simultan computergestützt mit bereits gespeicherten Daten abgeglichen werden. Es erfolgt der Aufbau einer Datenbank, die zur zielgerichteten Reparaturaufnahme nutzbar ist.

Zusammenfassend ist festzustellen, daß der Einsatz der Infrarottechnik zur Ermittlung von Temperaturen an sich bekannt ist. Es erfolgen beispielsweise durch einen Vergleich mit gespeicherten Daten Schlußfolgerungen bezüglich der Rohrleitungsleckermittelung. Der Einsatz vom Hubschraubern und Flugzeugen ist nicht unüblich. Ein durchgängiges Verfahren zur berührungslosen Sondierung von Leckagen, wie es in der nachfolgenden Aufgabenstellung und erfindungsgemäßen Lösung beschrieben wurde, ist jedoch nicht bekannt.

Die Aufgabe der Erfindung ist es, ein Verfahren zur berührungslosen Sondierung von Leckagen mittels rechnergestützter Auswertung technischer geografischer, terrestrischer und aeroterrestrischer Daten unter Einsatz fluggestützter Sensortechnik vorzuschlagen.
Wie in der Einleitung zur Erfindungsbeschreibung bereits zum Ausdruck gebracht, soll das Sondieren vorwiegend zum Feststellen und Auffinden von Leckagen an erdverlegten Produktleitungen, nämlich an Wasser- und Abwasserleitungen, erfolgen.

Erfindungsgemäß wird die Aufgabe gelöst, wobei hinsichtlich der grundlegenden erfinderischen Gedanken auf den Patentanspruch 1 verwiesen wird. Die weitere Ausgestaltung des erfindungsgemäßen Verfahrens ergibt sich aus den Patentansprüchen 2 bis 4.

Zur Darlegung der Erfindung sollen weitere Ausführungen erfolgen.
Zunächst werden die ermittelten oder ggfs. vorhandenen klimatischen, jahres- und tageszeitlichen Randbedingungen wie Bodenart, Boden- und Luftzustände (u.a. Frost), Regen, Sonneneinstrahlung und Vegetationsentwicklung für einen optimalen Einsatzzeitraum, daß sogenannte Flugfenster, ausgewertet.

Aufbauend auf diese Auswertung dienen DGPS-, geographische und leitungstechnische Parameter einem verfahrensimmanenten Flugführungs- und Steuerungssystem als Softwareinput, das Ort und Ablauf des fluggestützten Einsatzes der Sensortechnik zur Aufnahme, automatischen Selektion und Weitergabe dieser Sensorwerte sichert.
Die so gewonnenen Daten werden an die fluggestützte Auswerteeinheit oder bodengestützte Basisstation weitergeleitet.
Diese dynamischen Bilddaten werden unter zu Hilfenahme von Bildverarbeitungssoftware zu einem Infrarotrasterbild zusammengeführt, georeferenziert und entzerrt . Für die weitere Auswertung werden die IR-Bilddaten mittels Software, sowie der oben genannten geografischen und leitungstechnischen Parameter so verarbeitet, daß sogenannte "Punkthäufungen" als eine Ansammlung von IR-Bilddaten scheinbarer oder tatsächlicher Anomalien identifiziert werden können . Eine EDV - gerechte Selektion der IR-Bilder führt dazu, daß sich Punkthäufungen in der Nähe der Leitung als signifikantes Merkmal tatsächlicher Anomalien und u.a. der Wechsel von Pflanzenkulturen oder die Schattenbildung von Gebäuden nur als scheinbare Anomalien darstellen . Eine Wichtung der tatsächlichen thermischen Anomalien ist im Verfahren ebenso vorgesehen wie die Zuordnung von Lagekoordinaten .
Zur Schadstellenverifikation vor Ort werden diese Koordinaten zielgerichtet bei der Lecksuche genutzt.
Die Behebung der durch dieses Verfahren aufgefundenen Schäden erfolgt außerhalb dieser Erfindung.

Die Erfindung soll nunmehr anhand eines Ausführungsbeispiels erläutert werden.

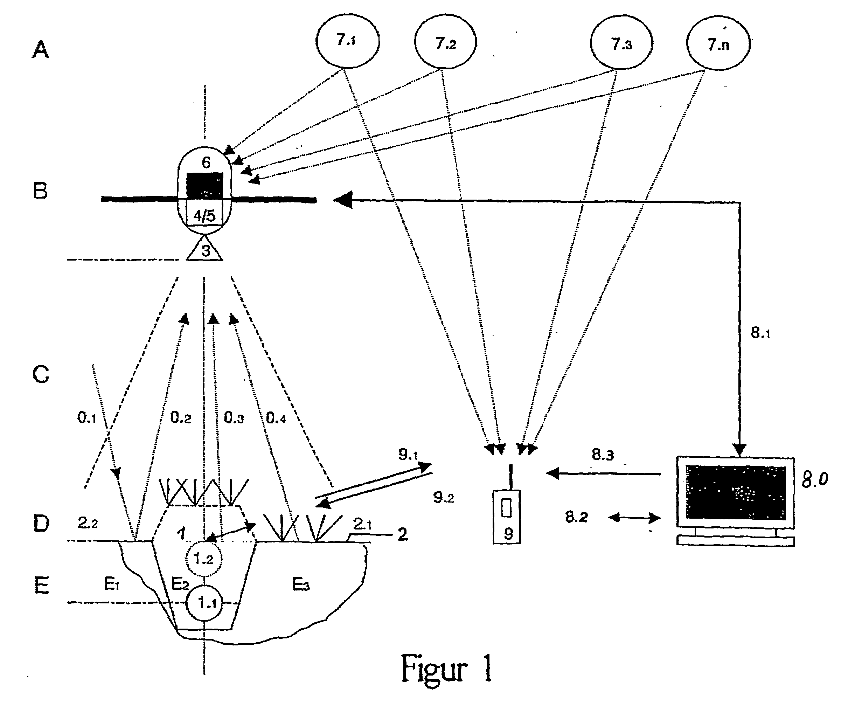

Die Figur 1 beinhaltet in Prinzipdarstellung den Verfahrensablauf. Die entsprechenden Positionszeichen bedeuten :
- 0.1: Solare Einstrahlung
- 0.2: Reflexion
- 0.3: Thermale-Abstrahlung
- 0.4: Emission
- 1: Leitungstrasse / Medienrohr
- 1.1: - im Graben (Senke)
- 1.2: - im Damm (Quelle)
- 2: Oberfläche
- 2.1: - mit Vegetation
- 2.2: - ohne Vegetation (Ödland)
- 3: Infrarot - Aufnahmesensorik
- 4: Automatisierte Datenselektion, -speicherung u. -übertragung
- 5: DGPS- / GIS - gestützter Bord- u. Steuerrechner
- 6: Fluggerät
- 7: Satelliten (1...n )
- 8: bodengestützte, automatisierte Bilddatenauswertung
- 8.1: Primärdatenaustausch
- 8.2: Datenbanksystem / GIS - Ein- u. Ausgabeeinheit
- 8.3: Übermittlung der Lagekoordinaten
- 9: DGPS - Gerät
- 9.1: Aufnahme der Vorort-Daten ( Paßpunkte )
- 9.2: Schadstellenverifikation Vorort

- A: Troposphäre
- B: Grundschicht /Aufnahmehorizont
- C: Beeinflussungshorizont
- D: Bodenschicht / Wechselhorizont (Atmosphäre - Strahlung / Vegetation - Boden)
- E: Untergrund / Bodenhorizont (Deckschicht - Oberboden :
- E1: Gewachsener Boden
- E2: verfüllter / geschütteter Boden
- E3: Beeinträchtigter Boden / thermische Anomalie)

Mit den Positionszeichen A,B,C, D, E, E1, E2, E3 sind die für das Verfahren maßgebenden Betrachtungshorizonte bezeichnet.

Gemäß Figur 1 sind die Vorort - Daten solare Strahlung 0.1 und deren Reflexion 0.2, die Bodenoberfläche 2 mit Vegetation 2.1 und ohne Vegetation (Ödland ) 2.2 dargestellt, wobei diese und weitere bereits vorher genannten Randbedingungen für einen optimalen Einsatzzeitpunkt ausgewählt werden.

Ist dieser Einsatzzeitraum gegeben, dienen aufbauend aus der Auswertung der Randbedingungen DGPS - Parameter unter Einbeziehung der Satelliten ( 7 , d.h. 7.1, 7.2 ...7.n), geografische und leitungstechnische Parameter (1 ... für die Trasse, 1.1 bzw. 1.2 ... für Medienleitungen) sowie, Strahlung "Thermische Abstrahlung" ( 0.3 ) und Emission ( 0.4 ) einem verfahrensimanenten Flugführungs- und Steuerungssystem als Software-Input. Die entsprechende Hardware, ein DGPS-gestützter Bordund Steuerrechner ( 5 ) ist im bzw. am Fluggerät ( 6 ) angeordnet. Das Führungs-und Steuerungssystem sichert den fluggestützten Einsatz der Infrarot - Aufnahmesensorik ( 3 ) und bewirkt die automatisierte Datenselektion, - speicherung und -übertragung ( 4 ). Die gewonnen Daten werden an die nicht zeichnerisch dargestellte fluggestützte Auswerteeinheit (automatisierte Bilddatenauswertung ... 5 ) oder die bodengestützte automatisierte Bilddatenauswertung ( 8.o ) weitergeleitet.
Diese gewonnen dynamischen Bilddaten werden unter zu Hilfenahme einer Bildverarbeitungssoftware ( 8.o ) zu einem Infrarotrasterbild zusammengeführt und danach georeferenziert und entzerrt. Eine EDV-gerechte Selektion der IR-Bilder( 8.o) führt dazu, daß sich Punkthäufungen in der Nähe der Leitung als signifikantes Merkmal tatsächlicher Anomalien und u.a. der Wechsel von Pflanzenkulturen oder die Schattenbildung von Gebäuden nur als scheinbare Anomalien darstellen . Eine Wichtung der tatsächlichen thermischen Anomalien ist im Verfahren ebenso vorgesehen wie die Zuordnung von Lagekoordinaten .

Der Primärdatenaustausch zwischen der Einheit für die automatisierte Datenslektion, - speicherung und -übertragung ( 4 ) und der Bilddatenauswerteeinheit ( 8.o ) wird mit der Pfeillinie ( 8.1 ) angedeutet.

Mit Hilfe eines DGPS - Gerätes ( 9 ) werden diese Lagekoordinaten ( 8.3 ) zum Auf-finden der Leckage am Medienrohr ( 1.1 bzw. 1.2 ) im beeinträchtigten Boden ( E3 ) vor Ort genutzt.

## Patentansprüche

1. Verfahren zur berührungslosen Sondierung von Leckagen, vorzugsweise an Wasser- und Abwasserleitungen, **dadurch gekennzeichnet, daß** in einem durch Randbedingungen bestimmten Zeitraum mit fluggestützten IR-Sensoren (3) aufgenommene dynamische Bilddaten im Zusammenhang mit einem Führungs-und Steuerungssystem (5) selektiert, mit digitalen und georeferenzierten Leitungsdaten zusammenführt, entlang einer Rohrtrasse (1) in bestimmten Rastern betrachtet , als Punkthaufen gewonnene Bilddaten identifiziert werden und an eine mit einer bestimmten Bildverarbeitungssoftware ausgestattete Auswerteeinheit (8.o) weiterleitet, entzerrt und zwischen scheinbaren und tatsächlichen Anomalien selektierte, mit Lagekoordinaten (8.3) versehene Verdachtsstelle ausgewiesen wird und zur Schadstellenverifikation (9.2) vor Ort führt.

2. Verfahren nach Anspruch 1, **dadurch gekennzeichnet, daß** in Verbindung mit einem DGPS - Gerät (9) diese Lagekoordinaten (9.2) zum Auffinden der Schadstelle an Leitung (1.1 bzw. 1.2) im beeinträchtigten Boden (E3) vor Ort genutzt werden.

3. Verfahren nach Anspruch 1, **dadurch gekennzeichnet, daß** die durch Sensortechnik (3) gewonnenen, dynamischen IR- Daten nach trassenrelevanter, automatischer Selektion (4) an eine flug- oder bodengestützte Auswerteeinheit geleitet werden.

4. Verfahren nach Anspruch 1, **dadurch gekennzeichnet, daß** unter Beachtung von Randbedingungen, die sich u.a. auf die vorhandenen klimatischen Verhältnisse sowie auf die Bodenart, die Boden- und Luftzustände (u.a. Frost), Regen, Sonneneinstrahlung und weiterer Einflußfaktoren stützen, sich ein optimaler Einsatzzeitraum zur Nutzung des Verfahrens zur Sondierung von Leckagen ergibt.

## Claims

1. Method for the non-contact leakage sounding preferably on water and/or waste water lines, **characterized in that** image data dynamically recorded by air-based IR sensors (3) over a boundary-conditioned period of time are selected using a guide and control system (5), compiled together with digital and geo-referenced line data, viewed along a pipeline (1) in a certain scanning pattern, interpreted as point cloud of gathered data, and passed on to a plotting system (8.0) equipped with a certain image processing software where the said date are equalized, apparent anomalies separated from actual anomalies, and suspicious spots output in cross-plots (8.3) and attribute to the verification of damaged areas (9.2) right on site.

2. Method according to claim 1 **characterized in that** the said plotting (9.2) is used in connection with a DGPS unit (9) for the localization of the damaged spot on the line (1.1 and/or 1.2) embedded in spoiled soil (E3) right on site.

3. Method according to claim 1 **characterized in that** the dynamic IR data gathered by the sensor technique (3) are automatically selected (4) using line-relevant criteria for such selection, and subsequently passed on to an either air-based or ground-based plotting system.

4. Method according to claim 1 **characterized in that** an optimum time for applying the method for leakage sounding can be determined taking into account such boundary conditions as prevailing climatic conditions as well as type of soil, state of the atmosphere and/or the ground (e.g. frost), rain, insolation and other influencing factors.

## Revendications

1. Procédé pour un sondage sans contact de fuites, de préférence sur les conduites d'eau et d'eau d'égout, **caractérisé par le fait que**, dans un laps de temps déterminé par des conditions marginales, des données d'images dynamiques prises par des capteurs à infrarouges à support aérien (3) sont sélectionnées en relation avec un système de guidage et de commande (5), collectées avec des données de conduites numériques et adaptées à la situation géographique, considérées sur certaines grilles le long d'un tracé de conduites (1), identifiées en tant que données d'images résultant d'amas de points et retransmises à une unité d'évaluation (8.0) pourvue d'un certain logiciel de traitement de l'image, la correction et la sélection en anomalies virtuelles et réelles, laisse reconnaître l'endroit présumé doté de coordonnées de position et mène à une vérification du point de fuite (9.2) sur le site.

2. Procédé selon revendication 1, **caractérisé par le fait qu'**en relation avec un appareil DGPS (9) ces coordonnées de position (9.2) sont mises en oeuvre sur le site pour détecter le lieu endommagé de la conduite (1.1 ou 1.2) dans le sol chargé (E3)

3. Procédé selon revendication 1, **caractérisé par le fait que** les données dynamiques obtenues par le matériel capteur (3) aux infrarouges suivant une sélection automatique (4) significative pour le tracé de conduites sont retransmises à une unité d'évaluation à support aérien et terrestre.

4. Procédé selon revendication 1, **caractérisé par le fait qu'**en considération des conditions marginales qui s'appuient entre autres sur les conditions climatiques existantes ainsi que sur la nature du sol, l'état du sol et de l'atmosphère (p. ex. gel, pluie, rayonnement solaire) et d'autres facteurs influents, il résulte un espace de temps optimum d'utilisation du procédé pour le sondage de fuites.
